# FASCICULE DE BREVET EUROPEEN

(11) **EP 0 407 267 B1**
(45) Date de publication et mention de la délivrance du brevet: **30.03.1994**
(21) Numéro de dépôt: 90401851.2
(22) Date de dépôt: 27.06.1990
(51) Int. Cl.: G05B 19/18

(54) **Procédé et dispositif de contrôle de la position dans l'espace d'une torche de soudage montée sur un robot**
Vorrichtung und Verfahren zur Kontrolle der Raumposition eines an einem Roboter befestigten Schweisskopfes
Method and apparatus for controlling the position of a welding torch mounted on a robot

(30) Priorité: 05.07.1989 FR 8909050
(43) Date de publication de la demande: 09.01.1991
(73) Titulaire: AUTOMOBILES PEUGEOT, 75116 Paris (FR); AUTOMOBILES CITROEN, 92200 Neuilly-sur-Seine (FR)
(72) Inventeur: Bourdon, Daniel, F-78490 Mere (FR)
(74) Mandataire: Durand, Yves Armand Louis

(56) Documents cités:
- DE-A- 1 933 058
- DE-U- 8 222 757
- US-A- 3 636 814
- US-A- 4 425 061

## Description

La présente invention a essentiellement pour objet un procédé de contrôle de la position dans l'espace d'un outil monté sur un robot et tel que par exemple une torche de soudage.

Elle vise également un dispositif de contrôle comportant application de ce procédé.

On sait que la position de montage d'une torche de soudage sur un bras de robot est capitale et conditionne la qualité de la soudure et donc de l'assemblage soudé.

En effet, un défaut de position de la torche ou de son point d'impact peut engendrer un cordon de soudage déporté ou de section réduite, ce qui peut conduire à un assemblage présentant des faiblesses sur le plan de la résistance mécanique et pouvant par conséquent être sujet à des ruptures.

Le défaut de position de la torche peut résulter d'un montage plus ou moins correct de cette torche et de son support sur le bras du robot, d'un choc sur la torche, d'un changement de torche, ou encore d'une dérive du robot.

En outre, dans les torches de soudage utilisant une électrode se présentant sous la forme d'un fil fusible guidé dans un conduit, il se produit à la longue, à l'intérieur du conduit, une usure provoquée par les sollicitations d'ordre thermique dues à la proximité de l'arc, et par les sollicitations d'ordre mécanique dues au défilement du fil fusible dans son conduit, ce qui se traduit par une ovalisation de celui-ci et par conséquent par un décalage du point d'impact du fil sur le joint à souder. Il faut encore ajouter que les torches de soudage peuvent comporter des défauts de fabrication qui peuvent se traduire au niveau du conduit intérieur précité, par un défaut de concentricité de l'axe de ce conduit par rapport à l'axe de la torche.

En bref, tous les défauts ci-dessus de positionnement de la torche sur le bras du robot et de position du point d'impact de cette torche ou plus exactement du fil fusible de la torche, doivent absolument être corrigés très précisément en début du cycle de fabrication et même pendant ce cycle, de façon que le cordon de soudure et les assemblages réalisés successivement avec ce cordon, soient d'une qualité excellente et constante pendant tout le cycle de fabrication.

Etant donné qu'aucun procédé ou dispositif satisfaisant n'a été proposé pour atteindre ces objectifs, la présente invention a pour but de combler cette lacune.

A cet effet, l'invention a essentiellement pour objet un procédé de contrôle de la position dans l'espace d'une torche de soudage montée sur un robot, caractérisé par un transfert de la torche de soudage par le robot vers un dispositif de contrôle où sont vérifiées automatiquement et sensiblement simultanément la position de la torche par rapport à un système de référence à trois axes orthogonaux et la position du point d'impact de la torche sur la pièce à traiter, grâce à un:
a) contrôle de la position du point d'impact de la torche (T) dans un plan de référence ;
b) contrôle de la position de ce point d'impact suivant une direction (Z-Z') perpendiculaire audit plan de référence ;
c) contrôle de la position de l'axe de la torche (T) suivant une première direction (X-X') parallèle à ce plan de référence ; et un
d) contrôle de la position de l'axe de la torche (T) suivant une deuxième direction (Y-Y') orthogonale à la direction (Z-Z') et à la première direction (X-X').

Ce procédé est encore caractérisé par l'émission d'un signal visible et/ou audible et par une mise en attente du robot portant la torche de soudage en cas d'écart entre l'une et/ou l'autre des positions vérifiées par le dispositif de contrôle et la position prédéterminée de montage de la torche sur le robot.

Le robot est avantageusement programmé de façon à amener périodiquement la torche au dispositif de contrôle.

On précisera encore ici que, pour une torche de soudage donnée, on bloquera les divers éléments du dispositif de contrôle dans la position idéale correspondant à la bonne position de la torche de soudage, et on amènera ensuite la torche montée sur le robot au dispositif de contrôle pour ainsi indiquer au robot la position correcte de contrôle.

On comprend donc de ce qui précède que, grâce à la station de contrôle selon cette invention, on pourra effectuer des relevés systématiques du point d'impact de l'extrémité de la torche et de la position angulaire de l'axe de cette torche dans un système de référence à trois axes orthogonaux.

Cette invention vise encore un dispositif de contrôle de la position d'une torche de soudage montée sur un robot, caractérisé par:
a) Des moyens de contrôle de la position du point d'impact de la torche (T) dans un plan de référence ;
b) Des moyens de contrôle de la position de ce point d'impact suivant une direction (Z-Z') perpendiculaire audit plan de référence ;
c) Des moyens de contrôle de la position de l'axe de la torche (T) suivant une première direction (X-X') parallèle à ce plan de référence ; et
d) Des moyens de contrôle de la position de l'axe de la torche (T) suivant une deuxième direction (Y-Y') orthogonale à la direction (Z-Z') et à la première direction (X-X').

Suivant une autre caractéristique de ce dispositif, les moyens cités sous a) sont constitués par une pastille ou analogue insérable dans l'une des faces d'un piston monté coulissant dans un support et qui est muni d'un premier capteur disposé orthogonalement à l'axe du piston, sous la pastille.

Cette pastille présente la forme soit d'un disque avec orifice central, soit d'un disque avec méplat où débouche une encoche ménagée dans ce disque.

On précisera encore ici que la face du piston recevant la pastille comporte un logement pour cette pastille, et à ce logement fait suite un trou axial ménagé dans le piston et dans lequel débouche un canal où est monté le premier capteur précité.

Suivant encore une autre caractéristique de l'invention, les moyens précités sous b) sont constitués par un deuxième capteur associé au support de piston et disposé orthogonalement à l'axe de ce support.

Le piston précité est pourvu d'une gorge annulaire susceptible de venir en correspondance avec un canal traversant le support de piston et muni du deuxième capteur précité.

Selon encore une autre caractéristique de l'invention, les moyens cités sous c) et d) sont respectivement constitués par un troisième et un quatrième capteurs solidaires d'une équerre et à chacun desquels est associé un piston palpeur monté coulissant dans ladite équerre.

Chaque piston palpeur est muni d'une gorge annulaire susceptible de venir en correspondance avec un canal qui traverse l'équerre et qui est muni du troisième ou quatrième capteur précité.

Suivant encore une autre caractéristique de l'invention, les canaux traversant le support du piston récepteur de la pastille et/ou l'équerre s'étendent tangentiellement à l'ouverture dudit support et/ou de ladite équerre, dans laquelle ouverture coulissent respectivement le piston récepteur et les deux pistons palpeurs.

On précisera encore ici que l'équerre précitée est solidaire du support du piston récepteur par l'intermédiaire d'une potence ou analogue.

Suivant encore une autre caractéristique de l'invention, il est prévu un boîtier interface auquel sont connectés les quatre capteurs précités et comportant une sortie reliée à l'entrée du robot, lequel boîtier est équipé d'autant de voyants que de paramètres contrôlés par le dispositif de contrôle.

Ainsi, les voyants signaleront immédiatement à l'utilisateur tel ou tel défaut de position de la torche de soudage montée sur le robot qui, par ailleurs, se mettra en position de repli et d'attente.

Mais d'autres avantages et caractéristiques de l'invention apparaîtront mieux dans la description détaillée qui suit et se réfère aux dessins annexés, donnés uniquement à titre d'exemple et dans lesquels :
La figure 1 est une vue générale et schématique d'une cellule de soudage robotisée permettant la manoeuvre automatique d'au moins une torche de soudage dont la position dans l'espace peut être contrôlée grâce au procédé et au dispositif selon cette invention ;
La figure 2 est une vue en élévation avec coupes partielles d'une station de contrôle de la position de la torche montée sur le robot ;
La figure 3 est une vue en coupe suivant la ligne III-III de la figure 2 ;
La figure 4 est une vue en coupe axiale et à plus grande échelle du support dans lequel coulisse le piston recevant la pastille ;
La figure 5 est une vue en coupe suivant la ligne V-V de la figure 4 ;
La figure 6 est une vue en élévation, à plus grande échelle et avec coupe partielle, du piston récepteur de la pastille.
Les figures 7 et 8 illustrent respectivement deux modes de réalisation de pastilles, les pastilles étant montrées en plan et en vue de dessus ; et
La figure 9 est une vue schématique et partiellement en perspective, illustrant en partie la station de contrôle et le boîtier interface connecté à la station de contrôle et à l'armoire de commande du robot.

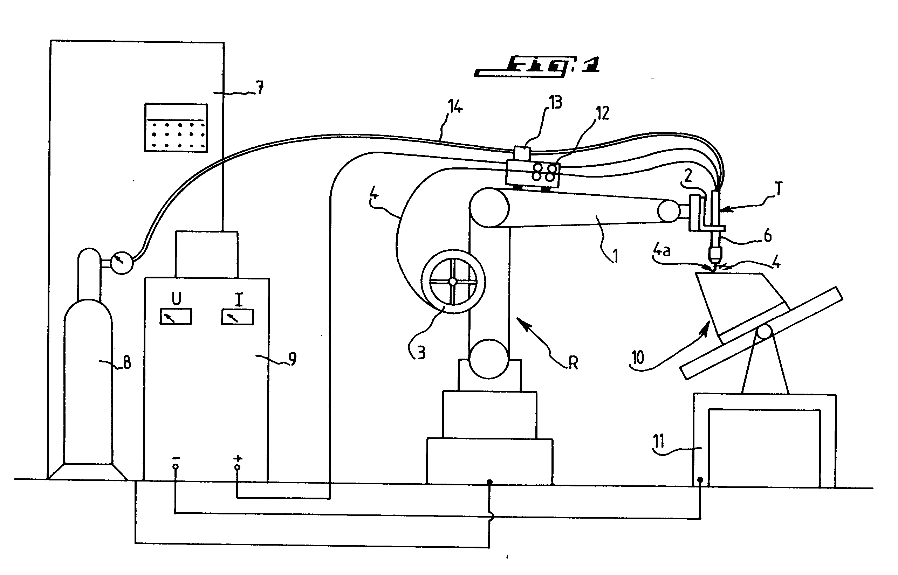

En se reportant à la figure 1, on voit une installation de soudage du type connu sous la dénomination MIG ou MAG, c'est-à-dire permettant le soudage grâce à une électrode fusible sous gaz inerte ou sous gaz actif.

Cette installation comprend un robot R dont le bras 1 porte une torche de soudage T par l'intermédiaire d'un support 2.

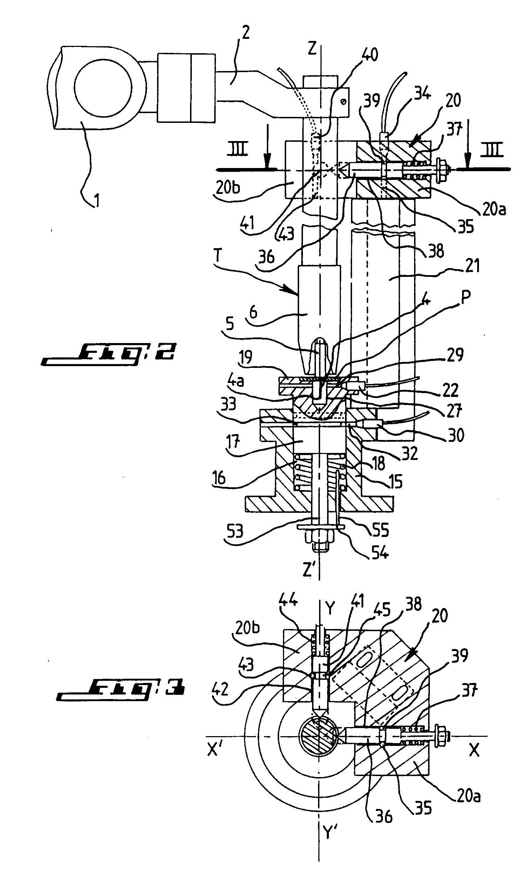

Une bobine 3 permet l'alimentation de la torche T en fil ou électrode fusible 4, lequel fil est guidé dans un conduit ou tube repéré en 5 sur la figure 2. Ce conduit 5 est situé dans l'axe de la torche T qui comporte, comme connu en soi, une enveloppe 6 extérieurement coaxiale au conduit 5.

On a montré en 7, sur la figure 1, une armoire de commande du robot R, en 8 une bouteille de gaz destiné à alimenter la torche T dans l'espace compris entre le conduit guide-fil 5 et l'enveloppe 6, en 9 une source d'alimentation en courant de la torche T et en 10 un assemblage à souder qui est maintenu sur un support 11. On a encore montré schématiquement en 12 sur la figure 1 un dévidoir et en 13 une électrovanne interposée sur la conduite de gaz 14 reliant la bouteille 8 à la torche T.

Bien entendu, l'installation visible sur la figure 1 comporte les liaisons électriques nécessaires entre la source d'alimentation 9 et la torche de soudage T.

Conformément à l'invention, on adjoint à cette installation de soudage, une station de contrôle qui sera maintenant décrite en se reportant plus particulièrement à la figure 2.

Cette station se compose essentiellement de trois modules, à savoir :
- Un support 15, de préférence cylindrique et dans l'ouverture 16 duquel coulisse un piston 17 sollicité par un ressort 18 et dans la face supérieure 19 duquel peut être insérée une pastille P qui sera décrite en détail ultérieurement.
- Une pièce en forme d'équerre 20 ; et
- Une potence ou analogue 21 reliant l'équerre 20 au support 15 du piston 17 de réception de la pastille P.

La station de contrôle constituée par les trois modules ci-dessus comporte un certain nombre de moyens qui permettent la vérification automatique de la position de la torche T préalablement montée avec son support 2 sur le bras 1 du robot R, et qui seront décrits en détail ci-après.

Tout d'abord, la station de contrôle comporte des moyens de contrôle de la position du point d'impact de la torche T dans un plan de référence horizontal, ledit point d'impact étant le point où l'extrémité libre 4a du fil fusible 4 est en contact avec l'assemblage à souder.

Les moyens de contrôle en question sont constitués par la pastille P insérée dans la face supérieure 19 du piston récepteur 17 monté coulissant dans le support 15, et par un premier capteur 22 constitué par une fibre optique et disposé, comme on le voit bien sur la figure 2, orthogonalement à l'axe du piston 17, sous la pastille P.

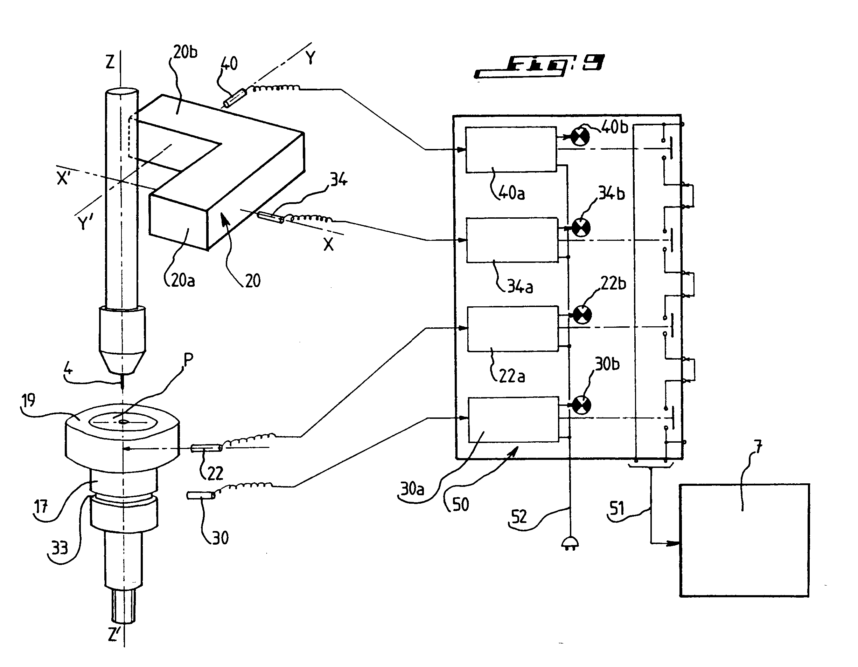

Cette pastille P peut revêtir deux formes de réalisation, comme on le voit sur les figures 7 et 8. Elle peut présenter soit la forme d'un disque avec un orifice central 23 comme on le voit sur la figure 7, soit la forme d'un disque tronqué ou avec méplat 24, comme on le voit sur la figure 8, lequel disque comporte alors une encoche 25 débouchant du côté du méplat 24.

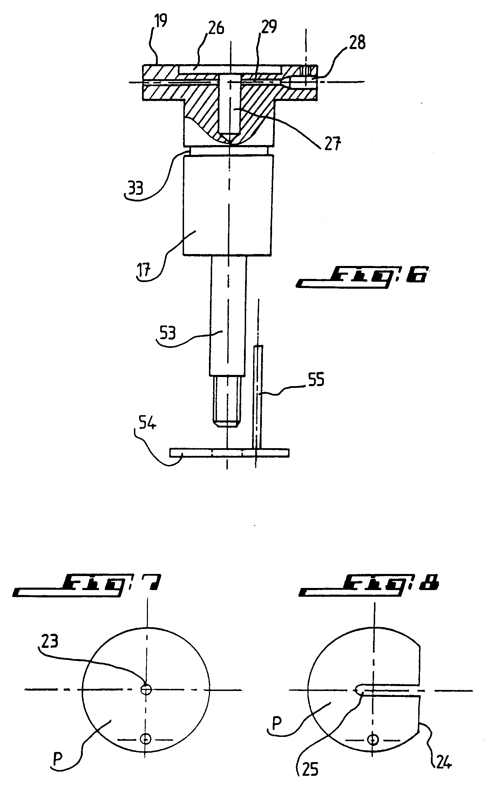

Comme il apparaît clairement sur la figure 6, le piston 17 comporte dans sa face supérieure 19 un logement 26 recevant la pastille P, lequel logement débouche dans un trou axial 27 pratiqué dans le piston 17 et qui servira d'espace de dégagement ou récepteur pour l'extrémité 4a du fil 4, comme on le décrira en détail plus loin à propos du fonctionnement.

On voit en 28 sur la figure 6 un logement ménagé dans la tête du piston 17 et permettant la fixation de la tête de fibre optique constituant le capteur 22. A ce logement 28 fait suite un canal 29 qui traverse la tête du piston 17, qui est perpendiculaire à l'axe de ce piston et le coupe. Plus précisément, le canal 29 débouche dans le trou axial 27 suivant un diamètre de ce trou, et ce canal 29 peut recevoir par son extrémité opposée à celle comportant le logement 28 un faisceau lumineux qui peut être constitué par la lumière du jour ou par un flux lumineux émanant d'une source appropriée.

La station de contrôle conforme à cette invention comprend également des moyens de contrôle de la position du point d'impact du fil 4 de la torche T sur le plan de joint des pièces à souder, suivant une direction verticale repérée en Z-Z' sur les figures 2 et 9.

Les moyens de contrôle en question sont constitués par un deuxième capteur 30 (figures 2 et 9) associé au support 15 du piston récepteur 17 et disposé orthogonalement à l'axe de ce support.

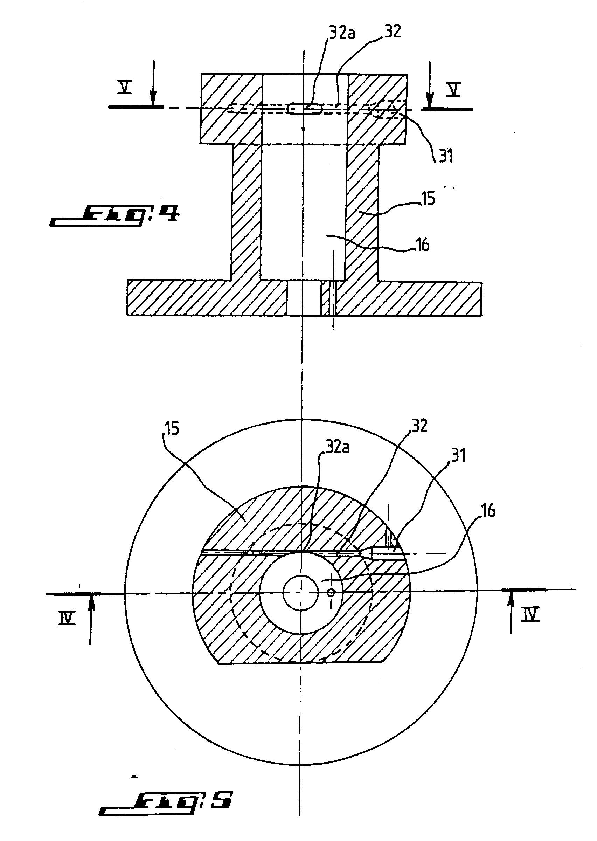

Comme on le voit mieux sur les figures 4 et 5, le support 15 comporte un logement 31 servant à la fixation de la tête d'une fibre optique constituant le capteur précité 30. A ce logement 31 fait suite un canal 32 qui traverse complètement le support 15 et qui s'étend tangentiellement à l'ouverture 16 de ce support, comme on le voit bien en 32a sur les figures 4 et 5. Comme décrit précédemment, dans le canal 32, pourra passer un faisceau lumineux aboutissant au capteur 30.

Il est à noter ici que le faisceau lumineux passant dans le canal 29 peut être interrompu par la pénétration du fil fusible 4 dans le trou axial 27 du piston 17, tandis que le faisceau lumineux passant dans le canal 32 pourra être interrompu par le piston récepteur 17. Ce dernier, comme on le voit bien sur les figures 2 et 6, comporte une gorge annulaire 33 susceptible de venir en correspondance avec le canal 32, auquel cas le faisceau lumineux passant dans ce canal ne sera évidemment pas interrompu, mais cela sera expliqué en détail plus loin à propos du fonctionnement.

La station de contrôle selon cette invention comporte encore des moyens de contrôle de la position de l'axe de la torche suivant une première direction horizontale repérée en X-X' sur les figures 3 et 9. Les moyens de contrôle en question, comme on le voit sur les figures 2, 3 et 9 comportent un troisième capteur 34 constitué encore une fois, par une fibre optique montée verticalement dans l'une 20a des deux branches de l'équerre 20 qui s'étend suivant un plan horizontal comme on le voit sur la figure 3. Au capteur 34 fait suite un canal 35 traversant la branche 20a de l'équerre 20 et dans lequel peut passer un faisceau lumineux. Un piston palpeur 36, sollicité par un ressort 37 est monté coulissant dans une ouverture 38 de la branche 20a de l'équerre 20, ladite ouverture s'étendant perpendiculairement au canal 35, comme on le voit bien sur la figure 2. Comme pour le piston récepteur 17, le piston palpeur 36 comporte une gorge annulaire 39 susceptible de venir en correspondance avec le canal 35 qui s'étend tangentiellement à l'ouverture 38, comme on le voit bien sur la figure 3.

Enfin, la station de contrôle selon l'invention comprend des moyens de contrôle de la position de l'axe de la torche T suivant une direction Y-Y' (voir figures 3 et 9) perpendiculaire à la direction X-X'.

Plus précisément, les moyens de contrôle en question comportent un quatrième capteur 40 constitué, encore une fois, par une fibre optique et monté verticalement sur la deuxième branche 20b de l'équerre 20.

Au quatrième capteur 40 est associé un piston palpeur 41, bien visible sur la figure 3 et qui est monté coulissant dans une ouverture 42 ménagée dans la branche 20b de l'équerre 20, parallèlement au plan de cette équerre et perpendiculairement audit capteur 40. A ce capteur 40 fait suite un canal 43 traversant la branche 20b de l'équerre 20 et s'étendant tangentiellement à l'ouverture 42 dans laquelle coulisse le piston palpeur 41 qui, tout comme le piston palpeur 34, est sollicité par un ressort 44. Comme on le voit bien sur la figure 3, le piston palpeur 41 comporte une gorge annulaire 45 susceptible de venir en correspondance avec le canal 43 traversant la branche 20b de l'équerre 20, de sorte que, si tel est le cas, le faisceau lumineux passant dans le canal 43 parviendra au capteur 40, alors que, si la gorge 45 n'est pas en correspondance avec le canal 43, le faisceau lumineux passant dans ce canal sera interrompu.

En résumé de la description qui précède, on comprend que la station de contrôle conforme à cette invention permettra de vérifier la position du point d'impact de l'extrémité de la torche T (premier capteur 22), et la position angulaire de l'axe de cette torche dans un système de référence à trois axes orthogonaux qui sont l'axe Z-Z' (deuxième capteur 30), l'axe X-X' (troisième capteur 34), et l'axe Y-Y' (quatrième capteur 40).

En se reportant à la figure 9, on voit que les quatre capteurs précités 22, 30, 34 et 40 sont connectés à un boîtier interface 50 dont la sortie 51 est reliée à l'armoire 7 du robot R.

Plus précisément, chaque capteur ou fibre optique 22, 30, 34, 40 est relié dans le boîtier interface 50, à un convertisseur opto-électrique 22a, 30a, 34a, 40a lui-même relié à un voyant lumineux, 22b, 30b, 34b, 40b, étant entendu que tous les convertisseurs sont alimentés en courant par une filerie 52.

Revenant aux figures 2 et 6, on voit que le piston 17 est muni d'une tige 53 sur laquelle est fixée une rondelle 54 solidaire d'une petite tige 55 traversant de façon coulissante le support 15 du piston pour assurer l'anti-rotation de celui-ci.

On observera encore que la pastille P avec encoche 25 visible sur la figure 8 peut être utilisée lorsqu'une goutte de métal solidifiée est laissée après soudage à l'extrémité ou pointe 4a du fil 4. Plus précisément, le fil 4 sera inséré dans l'encoche 25, la goutte de métal solidifiée se situant en dessous de la pastille P, mais, pour faire cette opération, il faudra prévoir dans la face supérieure 19 du piston 17 une creusure dans le fond du logement 26 recevant ladite pastille. Cette creusure pourra être réalisée par un agrandissement du trou axial 27 dans le piston 17, ou bien, le piston 17 pourra être coupé en conséquence. Lorsque l'électrode ou le fil de soudage défilant dans la torche T sera en tungstène, comme c'est le cas dans les soudages dénommés TIG, on pourra alors utiliser la pastille P visible sur la figure 7, car aucune goutte de métal solidifié ne sera produite après soudage et le fil 4 pourra donc passer au travers de l'orifice 23.

Mais, pour une meilleure compréhension de l'invention, on décrira ci-après en détail le fonctionnement de la station de contrôle qui vient d'être décrite en se reportant plus particulièrement aux figures 2 et 9.

La torche T avec son support 2 étant montée sur le bras 1 du robot R, on va tout d'abord créer un sous-programme de contrôle.

Tout d'abord, le piston 17 de réception de la pastille P, ainsi que les deux pistons palpeurs 36 et 42 seront immobilisés à l'aide de trois petits axes (non représentés) insérés dans les canaux 32, 35 et 43 et passant dans les gorges annulaires 33, 39 et 45 du piston 17 et des pistons palpeurs 36 et 41 respectivement. Ainsi, le piston 17 et les pistons palpeurs 36 et 41 seront momentanément bloqués dans le support 15 et dans l'équerre 20 respectivement, les positions respectives de ces trois pistons correspondant aux coordonnées optimales de la torche T dans l'espace.

La torche T, qui est en principe correctement montée et positionnée sur le bras 1 du robot R, est amenée à ladite station de contrôle, en contact avec les deux pistons palpeurs 36 et 41 préalablement immobilisés comme expliqué plus haut. En d'autres termes, au départ, la position de la torche montée par l'opérateur sur le bras du robot est censée être bonne, ce qui permet de créer le sous-programme de contrôle comme on l'expliquera plus loin.

La torche T est alors descendue pour réaliser le ciblage parfait du fil-électrode 4 au travers du trou calibré 23 ou de l'encoche 25 dans la pastille P trouvant place sur la face supérieure 19 du piston 17. Plus précisément, l'extrémité ou nez de la torche prendra appui sur la pastille P constituant en quelque sorte un plan de référence horizontal permettant de fixer la position de la torche dans la direction verticale, et une certaine longueur du fil 4 passant au travers de la pastille P devra exister pour que le fil coupe le faisceau lumineux passant dans le canal 29 et allant vers le premier capteur 22, ce qui correspond à une distance déterminée entre l'extrémité 4a du fil 4 et l'extrémité ou nez de la torche, laquelle distance correspond à la distance idéale pour le soudage à effectuer.

A ce stade, toutes les coordonnées de la position de la torche T, et telles qu'imposées par la station de contrôle, comme expliqué précédemment, sont enregistrées et serviront de référence lors des passages de la torche en cycle de production. C'est dire qu'on aura ainsi réalisé un sous-programme qui est achevé en programmant le robot R en position d'amenée vers le premier point du programme principal.

Ensuite, les axes d'immobilisation des trois pistons 17, 36 et 41 sont retirés, de sorte que la station de contrôle montrée sur la figure 2 devient opérationnelle.

C'est dire que le robot R est programmé de telle sorte qu'il présente périodiquement la torche de soudage T à la station de contrôle qui est placée à proximité du robot. Autrement dit, le capteur 22 de détection du point d'impact de la torche, et les trois capteurs 30, 34 et 40 détecteront presque simultanément, en 0,5 seconde environ, les coordonnées correspondantes de la torche. Ces coordonnées seront directement transmises sous forme d'un seul signal digital à l'entrée du robot R, ceci par l'intermédiaire du boîtier interface 50. En fonction de l'information recueillie, le robot poursuit son cycle de travail si les coordonnées de la torche ont été reconnues correctes par la station de contrôle, ou bien, dans le cas contraire, se met en position d'attente et/ou de repli si l'une des quatre coordonnées n'est pas correcte. L'un ou l'autre des voyants 22b, 30b, 34b et 40b correspondant à la coordonnée non correcte ou non respectée permettra de localiser le défaut rapidement.

Mais, pour plus de clarté, on décrira ci-après comment s'effectue le contrôle des coordonnées de la torche T. La torche T est amenée du poste de travail à la station de contrôle après avoir effectué un certain nombre d'opérations de soudage.

Si sa position est toujours bonne, elle est centrée par son extrémité formée par le fil-électrode 4 sur la pastille de ciblage P dont le calibrage du trou (pastille P de la figure 7) ou de l'encoche (pastille P de la figure 8), est défini en fonction du diamètre du fil-électrode utilisé et également des tolérancnes de décalage admises.

Une course verticale suivant l'axe Z-Z' est alors imprimée à la torche dont le nez prend appui sur la pastille P. Le capteur 22 va alors détecter ou non la présence d'une certaine longueur de fil ayant traversé la pastille P. Si le fil est détecté par le capteur 22, cela signifie que le point d'impact de l'extrémité 4a du fil respecte la précision géométrique exigée pour l'exécution correcte du programme garantissant la qualité de l'assemblage soudé. Cette détection du fil validera une première autorisation pour la poursuite du cycle. Par contre, si le fil 4 n'est pas détecté, c'est-à-dire ne coupe pas le faisceau lumineux passant dans le canal 29, ceci signifie que le ciblage sur la pastille P est mauvais. Dès lors, le défaut sera signalé par le voyant 22b qui s'allumera, tandis que la procédure de repli du robot en position d'attente pour dépannage s'effectuera, étant bien entendu que la poursuite du cycle est interrompue.

Le déplacement vertical de la torche T fera que le nez de la torche, en prenant appui sur la pastille P, provoquera le déplacement vers le bas du piston 17.

Si, lors du déplacement vertical du piston, le canal 32 est obstrué, c'est-à-dire si la gorge annulaire, 33 du piston 17 ne vient pas en correspondance avec le canal 32, cela signifie que le positionnement de la torche T suivant l'axe vertical Z-Z' n'est pas correct. Le défaut sera matérialisé par un signal lumineux sur le voyant 30b associé au convertisseur 30a relié au capteur 30, la poursuite du cycle sera interrompue et le robot se mettra en position d'attente pour dépannage. Si, par contre, la gorge 33 du piston 17 vient en correspondance avec le canal 32, ceci signifie que la pointe de la torche sur l'axe vertical Z-Z' a une position géométrique conforme aux tolérances imposées pour assurer la réalisation de l'assemblage dans de bonnes conditions. Le voyant 30b ne s'allumera pas, et cette deuxième détection, après celle du point d'impact de la torche, validera une deuxième autorisation pour la poursuite du cycle.

Enfin, si les coordonnées relevées sur les axes X-X' et Y-Y' sont bonnes, c'est-à-dire si l'angle de la torche par rapport au plan de la pastille P est respecté et correspond par conséquent à une position angulaire que doit respecter la torche par rapport au plan de joint à assembler, les voyants 34b et 40b ne s'allumeront pas. Si par contre l'une des deux coordonnées suivant X-X' ou Y-Y' n'est pas bonne, cela signifie que la position angulaire de la torche n'est pas conforme à la position imposée par la station de contrôle, et l'un des voyants précités s'allumera, puis la procédure de repli du robot en position d'attente pour dépannage s'effectuera, étant entendu que la poursuite du cycle sera interrompue.

On observera ici que les capteurs 34 et 40 fonctionneront tout comme le capteur 30. Autrement dit, lorsque les gorges annulaires 39 et 45 des pistons palpeurs 36 et 41 respectivement seront en correspondance comme on le voit sur la figure 3, cela signifiera que les deux coordonnées seront respectées. Dans le cas contraire, c'est-à-dire s'il n'y a pas correspondance, le faisceau lumineux passant dans les canaux 35 et 43 sera interrompu, ce qui se répercutera sur les capteurs 34 et 40 respectivement, et il en résultera que les deux voyants lumineux associés à ces capteurs s'allumeront et que le robot se mettra en position d'attente puisque l'une et/ou l'autre des deux coordonnées devra être corrigée. Les figures 2 et 3 illustrent clairement comment la torche vient en contact avec les deux pistons palpeurs 36 et 41.

Bien entendu si les coordonnées suivant les axes X-X' et Y-Y' s'avèrent bonnes après vérification par la station de contrôle, les deux capteurs 34 et 40 valideront les troisième et quatrième autorisations de poursuite du cycle.

Il faut noter ici que la précision de ces deux coordonnées sera fonction de la largeur de la gorge dans les deux pistons palpeurs 36 et 41, de sorte que les côtes d'usinage des gorges doivent être définies en conséquence.

Ainsi, comme on le comprend de ce qui précède, la station de contrôle permet de contrôler d'une façon très fiable la répétitivité du point d'impact du fil de torche et la position angulaire de l'axe de cette torche.

Il convient encore de dire quelques mots sur le fonctionnement de la station de contrôle en cas de changement de torche.

Si on utilise une torche du même type que la précédente, on utilise le sous-programme de contrôle établi pour la torche précédente, comme expliqué ci-avant. Les quatre voyants 22b, 30b, 34b et 40b de chacune des coordonnées contrôlées doivent être éteints, et si ce n'est pas le cas, la position de la nouvelle torche devra alors être modifiée en conséquence et directement sur place dans son support afin de retrouver les coordonnées de la torche précédente, matérialisées par l'extinction des quatre voyants de contrôle.

De cette manière, la station de contrôle permet de retrouver fidèlement la position du point d'impact de la torche, ainsi que l'orientation de son axe dans l'espace. On évite aussi un décalage du programme principal qui peut être très important en nombre de points programmés et on gagne ainsi un temps important sur la durée de l'intervention et donc sur la productivité.

On remarquera encore que si l'on veut utiliser une torche très différente de la torche précédemment utilisée, on peut refaire un sous-programme à l'aide de la station de contrôle, comme expliqué précédemment.

Tout ce qui précède et qui concerne le changement de torche, s'applique également au cas d'un changement de tube ou conduit 5 de guidage du fil-électrode.

Revenant au contrôle de la coordonnée du point d'impact de la torche sur l'axe vertical Z-Z', on précisera que la détection par le capteur 22 s'effectue suivant le même principe que décrit à propos des autres capteurs. Cela veut dire que le voyant 22b associé au capteur 22 reste éteint si la position de l'extrémité 4a du fil 4 sur l'axe Z-Z' est correcte, mais ici, c'est le fil qui coupe le faisceau lumineux (position correcte) ou bien ne coupe pas ce faisceau, auquel cas la position du fil est incorrecte, de sorte que le voyant 22b s'allume.

On a donc réalisé suivant l'invention une station de contrôle qui impose une répétitivité de la position d'un outil, tel qu'une torche de soudage, dans l'espace, et qui permet par conséquent un suivi fidèle des trajectoires formées par le ou les plans de joints des pièces à souder, de sorte que l'assemblage de ces pièces est quasiment parfait.

Bien entendu, l'invention n'est nullement limitée au mode de réalisation du dispositif décrit et illustré qui n'a été donné qu'à titre d'exemple.

C'est ainsi que le premier module de la station de contrôle, à savoir le support 15 et son piston associé 17, et le deuxième module de cette station, à savoir l'équerre 20 de prise d'angulation, pourraient être utilisés indépendamment de façon à réaliser d'autres contrôles de position nécessitant moins de prises de mesure que dans le cas envisagé dans la description qui précède.

## Revendications

1. Procédé de contrôle de la position dans l'espace d'une torche de soudage montée sur un robot, caractérisé par un transfert de la torche de soudage par le robot vers un dispositif de contrôle où sont vérifiées automatiquement et sensiblement simultanément la position de la torche par rapport à un système de référence à trois axes orthogonaux et la position du point d'impact de la torche sur la pièce à traiter, grâce à un:
a) contrôle de la position du point d'impact de la torche (T) dans un plan de référence ;
b) contrôle de la position de ce point d'impact suivant une direction (Z-Z') perpendiculaire audit plan de référence ;
c) contrôle de la position de l'axe de la torche (T) suivant une première direction (X-X') parallèle à ce plan de référence ; et un
d) contrôle de la position de l'axe de la torche (T) suivant une deuxième direction (Y-Y') orthogonale à la direction (Z-Z') et à la première direction (X-X').

2. Procédé selon la revendication 1, caractérisé par l'émission d'un signal visible et/ou audible et par une mise en attente du robot portant la torche de soudage en cas d'écart entre l'une et/ou l'autre des positions vérifiées par le dispositif de contrôle et la position prédéterminée de montage de la torche sur le robot.

3. Procédé selon la revendication 1 ou 2, caractérisé en ce que le robot est programmé de façon à amener périodiquement la torche au dispositif de contrôle.

4. Procédé selon l'une des revendications 1 à 3, caractérisé en ce que, pour une torche de soudage donnée, on bloque les divers éléments du dispositif de contrôle dans la position idéale correspondant à la bonne position de la torche de soudage, et on amène la torche montée sur le robot au dispositif de contrôle pour ainsi indiquer au robot la position correcte de contrôle.

5. Dispositif de contrôle de la position d'une torche de soudage montée sur un robot, caractérisé par:
a) Des moyens de contrôle de la position du point d'impact de la torche (T) dans un plan de référence ;
b) Des moyens de contrôle de la position de ce point d'impact suivant une direction (Z-Z') perpendiculaire audit plan de référence ;
c) Des moyens de contrôle de la position de l'axe de la torche (T) suivant une première direction (X-X') parallèle à ce plan de référence ; et
d) Des moyens de contrôle de la position de l'axe de la torche (T) suivant une deuxième direction (Y-Y') orthogonale à la direction (Z-Z') et à la première direction (X-X').

6. Dispositif selon la revendication 5, caractérisé en ce que les moyens cités sous a) sont constitués par une pastille ou analogue (P) insérable dans l'une (19) des faces d'un piston récepteur (17) qui est monté coulissant dans un support (15) et qui est muni d'un premier capteur (22) disposé orthogonalement à l'axe du piston (17), sous la pastille (P).

7. Dispositif selon la revendication 6, caractérisé en ce que la pastille précitée (P) présente la forme soit d'un disque avec orifice central (23), soit d'un disque avec méplat (24) où débouche une encoche (25) ménagée dans ce disque.

8. Dispositif selon la revendication 6 ou 7, caractérisé en ce que la face (19) du piston récepteur de la pastille (P) comporte un logement (26) pour cette pastille, et à ce logement fait suite un trou axial (27) ménagé dans le piston (17) et dans lequel débouche un canal (29) où est monté le premier capteur précité (22).

9. Dispositif selon la revendication 5 ou 6, caractérisé en ce que les moyens précités sous b) sont constitués par un deuxième capteur (30) associé au support (15) de piston (17) et disposé orthogonalement à l'axe de ce support.

10. Dispositif selon la revendication 6, 8 ou 9, caractérisé en ce que le piston récepteur précité (17) est pourvu d'une gorge annulaire (33) susceptible de venir en correspondance avec un canal (32) traversant le support (15) de piston et muni du deuxième capteur précité (30).

11. Dispositif selon la revendication 5, caractérisé en ce que les moyens cités sous c) et d) sont respectivement constitués par un troisième (34) et un quatrième capteurs (40) solidaires d'une équerre (20) et à chacun desquels est associé un piston palpeur (36, 41) monté coulissant dans ladite ladite équerre.

12. Dispositif selon la revendication 11, caractérisé en ce que chaque piston palpeur (36, 41) est muni d'une gorge annulaire (39, 45) susceptible de venir en correspondance avec un canal (35, 43) qui traverse l'équerre (20) et qui est muni d'un capteur précité (34, 40).

13. Dispositif selon la revendication 10 ou 12, caractérisé en ce que les canaux (32, 35, 43) traversant le support (15) de piston récepteur (17) et/ou l'équerre (20), s'étendent tangentiellement à l'ouverture (16, 38, 42) du support (15) et/ou de l'équerre (20), dans laquelle coulissent respectivement le piston récepteur (17) et les deux pistons palpeurs (36, 41).

14. Dispositif selon l'une des revendications 6 à 13, caractérisé en ce que l'équerre précitée (20) est solidaire du support (15) de piston récepteur (17) par l'intermédiaire d'une potence ou analogue (21).

15. Dispositif selon l'une des revendications 6 à 14, caractérisé par un boîtier interface (50) auquel sont connectés les quatre capteurs précités (22, 30, 34, 40) et comportant une sortie (51) reliée à l'entrée du robot (R), lequel boîtier est équipé d'autant de voyants (22b, 30b, 34b, 40b) que de paramètres contrôlés par le dispositif de contrôle.

## Patentansprüche

1. Vorrichtung zur Kontrolle der Raumlage eines an einem Roboter angeordneten Schweissbrenners, gekennzeichnet durch die Überführung des Schweissbrenners durch den Roboter zu einer Kontrollvorrichtung hin, wo die Stellung des Schweissbrenners gegenüber einem Bezugssystem mit drei orthogonalen Achsen und die Stellung des Auftreffpunktes des Brenners auf dem zu behandelnden Werkstück automatisch und im wesentlichen gleichzeitig nachgeprüft werden, dank einer :
a) Kontrolle der Stellung des Auftreffpunktes des Brenners (T) in einer Bezugsebene ;
b) Kontrolle der Stellung dieses Auftreffpunktes in einer zu der besagten Bezugsebene senkrechten Richtung (Z-Z') ;
c) Kontrolle der Stellung der Achse des Brenners (T) in einer zu dieser Bezugsebene parallelen ersten Richtung (X-X') ; und einer
d) Kontrolle der Stellung der Achse des Brenners (T) in einer zweiten zu der Richtung (Z-Z') und zu der ersten Richtung (X-X') orthogonalen zweiten Richtung (Y-Y').

2. Verfahren nach Anspruch 1, gekennzeichnet durch die Sendung eines sichtbaren und/oder hörbaren Signals und durch ein Inbereitschaftstellen des den Schweissbrenner tragenden Roboters im Falle einer Abweichung zwischen der einen und/oder der anderen der durch die Kontrollvorrichtung nachgeprüften Stellungen und der vorbestimmten Einbaustellung des Brenners an dem Roboter.

3. Verfahren nach Anspruch 1 oder 2, dadurch gekennzeichnet, dass der Roboter programmiert ist, um den Brenner periodisch zu der Kontrollvorrichtung hinzubringen.

4. Verfahren nach einem der Ansprüche 1 bis 3, dadurch gekennzeichnet, dass, bei einem gegebenen Schweissbrenner, man die verschiedenen Elemente der Kontrollvorrichtung in der der guten Stellung des Schweissbrenners entsprechenden idealen Lage blokiert und man den an dem Roboter angeordneten Brenner zu der Kontrollvorrichtung hinbringt, um somit dem Roboter die richtige Kontrollstellung anzuzeigen.

5. Vorrichtung zur Kontrolle der Lage eines an einem Roboter angeordneten Schweissbrenners, gekennzeichnet durch :
a) Mittel zur Kontrolle der Stellung des Auftreffpunktes des Brenners (T) in einer Bezugsebene ;
b) Mittel zur Kontrolle der Stellung dieses Auftreffpunktes in einer zur besagten Bezugsebene senkrechten Richtung (Z-Z') ;
c) Mittel zur Kontrolle der Stellung der Achse des Brenners (T) in einer zu dieser Bezugsebene parallelen ersten Richtung (X-X') ; und
d) Mittel zur Kontrolle der Stellung der Achse des Brenners (T) in einer zu der Richtung (Z-Z') und zu der ersten Richtung (X-X') orthogonalen zweiten Richtung (Y-Y').

6. Vorrichtung nach Anspruch 5, dadurch gekennzeichnet, dass die unter a) genannten Mittel durch ein in eine (19) der Flächen eines Aufnahmekolbens (17) einsteckbares Plättchen oder dergleichen (P) gebildet werden, der in einem Träger (15) gleitbar angeordnet ist und der mit einem orthogonal zur Achse des Kolbens (17) unterhalb des Plättchens (P) angeordneten ersten Messwertgeber (22) versehen ist.

7. Vorrichtung nach Anspruch 6, dadurch gekennzeichnet, dass das vorgenannte Plättchen (P) die Gestalt entweder einer Scheibe mit einer mittleren Öffnung (23) oder einer Scheibe mit einer Abflachung (24) in welche eine in dieser Scheibe gebildete Kerbe mündet, aufweist.

8. Vorrichtung nach Anspruch 6 oder 7, dadurch gekennzeichnet, dass die Fläche (19) des das Plättchen (P) aufnehmenden Kolbens eine Aufnahme (26) für dieses Plättchen aufweist und an dieser Aufnahme sich ein in dem Kolben (17) gebildetes axiales Loch (27) anschliesst, in welches ein Kanal (29), in welchem der erste vorgenannte Messwertgeber (22) angeordnet ist, mündet.

9. Vorrichtung nach Anspruch 5 oder 6, dadurch gekennzeichnet, dass die unter b) vorgenannten Mittel durch einen dem Träger (15) des Kolbens (17) zugeordneten und orthogonal zur Achse dieses Trägers angeordneten zweiten Messwertgeber (30) gebildet werden.

10. Vorrichtung nach Anspruch 6, 8 oder 9, dadurch gekennzeichnet, dass der vorgenannte Aufnahmekolben (17) mit einer ringförmigen Nut (33) versehen ist, die geeignet ist, mit einem den Kolbenträger (15) dursetzenden und mit dem zweiten vorgenannten Messwertgeber (30) versehenen Kanal (32) in Verbindung gesetzt zu werden.

11. Vorrichtung nach Anspruch 5, dadurch gekennzeichnet, das die unter c) und d) genannten Mittel jeweils durch einen dritten und einen vierten mit einem Winkel (20) fest verbundenen Messwertgeber (34) und (40), denen jeweils ein gleitbar in dem besagten Winkel angeordneter Fühlerkolben (36, 41) zugeordnet ist, gebildet werden.

12. Vorrichtung nach Anspruch 11, dadurch gekennzeichnet, dass jeder Fühlerkolben (36, 41) mit einer ringförmigen Nut (39, 45) versehen ist, die geeignet ist, mit einem Kanal (35, 43), der den Winkel (20) durchsetzt und der mit einem vorgenannten Messwertgeber (34, 40) versehen ist, in Verbindung gesetzt zu werden.

13. Vorrichtung nach Anspruch 10 oder 12, dadurch gekennzeichnet, dass die den Träger (15) des Aufnahmekolbens (17) und/oder des Winkels (20) durchsetzenden Kanäle (32, 35, 43) sich tangential zu der Öffnung (16, 38, 42) des Trägers (15) und/oder des Winkels (20) erstrecken, in welcher jeweils der Aufnahmekolben (17) und die beiden Fühlerkolben (36, 41) gleiten.

14. Vorrichtung nach einem der Ansprüche 6 bis 13, dadurch gekennzeichnet, dass der vorgenannte Winkel (20) mit dem Träger (15) des Aufnahmekolbens (17) über einen Stützengalgen oder dergleichen (21) fest verbunden ist.

15. Vorrichtung nach einem der Ansprüche 6 bis 14, gekennzeichnet durch ein Schnittstellengehäuse (50) an welches die vier vorgenannten Messwertgeber (22, 30, 34, 40) angeschlossen sind und das einen mit dem Eingang des Roboters (R) verbundenen Ausgang (51) aufweist, welches Gehäuse mit so vielen Schauzeichen (22b, 30b, 34b, 40b), wie es durch die Kontrollstation kontrollierten Parameter gibt, ausgerüstet ist.

## Claims

1. Method of control of the position in the space of a welding torch mounted onto a robot, characterized by a transfer of the welding torch by the robot towards a control device where are automatically and substantially simultaneously checked the position of the torch with respect to a reference system with three orthogonal axes and the position of the point of impact of the torch onto the part to be treated owing to a :
a) control of the position of the impact point of the torch (T) in a reference plane ;
b) control of the position of this impact point in a direction (Z-Z') perpendicular to the said reference plane ;
c) control of the position of the axis of the torch (T) in a first direction (X-X') parallel to this reference plane ; and a
d) control of the position of the axis of the torch (T) in a second direction (Y-Y') orthogonal to the direction (Z-Z') and to the first direction (X-X').

2. Method according to claim 1, characterized by the emission of a visible and/or audible signal and by putting the robot carrying the welding torch in a waiting condition in case of deviation between one and/or the other one of the positions checked by the control device and the predetermined mounting position of the torch onto the robot.

3. Method according to claim 1 or 2, characterized in that the robot is programmed so as to bring the torch periodically to the control device.

4. Method according to one of claims 1 to 3, characterized in that with a given welding torch, one blocks the various elements of the control device in the ideal position corresponding to the good position of the welding torch and one brings the torch mounted onto the robot to the control device to thus indicate to the robot the correct control position.

5. Device for the control of the position of a welding torch mounted onto a robot, characterized by :
a) means for controlling the position of the impact point of the torch (T) in a reference plane ;
b) means for controlling the position of this impact point in a direction (Z-Z') perpendicular to the said reference plane ;
c) means for controlling the position of the axis of the torch (T) in a first direction (X-X') parallel to this reference plane ; and
d) means for controlling the position of the axis of the torch (T) in a second direction (Y-Y') orthogonal to the direction (Z-Z') and to the first direction (X-X').

6. Device according to claim 5, characterized in that the means cited under a) are constituted by a chip or the like (P) insertable into one (19) of the faces of a receiving piston (17) which is slidably mounted in a support (15) and which is provided with a first sensor (22) disposed orthogonally to the axis of the piston (17) underneath the chip (P).

7. Device according to claim 6, characterized in that the aforesaid chip (P) exhibits the shape either of a disk with a central aperture (23) or of a disk with a flattening (24) where opens a notch (25) formed in this disk.

8. Device according to claim 6 or 7, characterized in that the face (19) of the piston receiving the chip (P) comprises an accommodating recess (26) for this chip and this recess is followed by an axial hole (27) formed in the piston (17) and into which opens a duct (29) where is mounted the first aforesaid sensor (22).

9. Device according to claim 5 or 6, characterized in that the means aforesaid under b) are constituted by a second sensor (30) associated with the support (15) of the piston (17) and disposed orthogonally to the axis of this support.

10. Device according to claim 6, 8 or 9, characterized in that the aforesaid receiving piston (17) is provided with an annular groove (33) adapted to come in correspondance with a duct (32) extending through the support (15) of the piston and provided with the second aforesaid sensor (30).

11. Device according to claim 5, characterized in that the means cited under c) and d) are respectively constituted by a third (34) and a fourth sensors (40) made fast to a square (20) and with each one thereof is associated a feeler piston (36, 41) slidably mounted within the said square.

12. Device according to claim 11, characterized in that each feeler piston (36, 41) is provided with an annular groove (39, 45) adapted to come in correspondence with a duct (35, 43) which extends through the square (20) and which is provided with one aforesaid sensor (34, 40).

13. Device according to claim 10 or 12, characterized in that the ducts (32, 35, 43) extending through the support (15) of the receiving piston (17) and/or the square (20) extend tangentially to the opening (16, 38, 42) of the support (15) and/or of the square (20) in which are sliding the receiving piston (17) and both feeler pistons (36, 41), respectively.

14. Device according to one of claims 6 to 13, characterized in that the aforesaid square (20) is made fast to the support (15) of the receiving piston (17) through the medium of a bracket or the like (21).

15. Device according to one of claims 6 to 14, characterized by an interface box (50) to which are connected the four aforesaid sensors (22, 30, 34, 40) and comprising an output (51) connected to the input of the robot (R), which box is fitted with as many visual indicators (22b, 30b, 34b, 40b) as they are parameters controlled by the control station.
